# EUROPÄISCHE PATENTSCHRIFT

(11) **EP 1 216 860 B1**
(45) Veröffentlichungstag und Bekanntmachung des Hinweises auf die Patenterteilung: **03.01.2007**
(21) Anmeldenummer: 01128661.4
(22) Anmeldetag: 01.12.2001
(51) Int. Cl.: B60G 17/015, B60G 17/052

(54) **Niveauregelanlage für ein Fahrzeug**
Levelling system for a vehicle
Dispositif de réglage du niveau d'un véhicule

(30) Priorität: 21.12.2000 DE 10064395
(43) Veröffentlichungstag der Anmeldung: 26.06.2002
(73) Patentinhaber: Continental Aktiengesellschaft, 30165 Hannover (DE)
(72) Erfinder: Grotendorst, Jörg, 30823 Garbsen (DE); König, Oliver, 30171 Hannover (DE); Nettelmann, Marc, 30826 Garbsen (DE)

(56) Entgegenhaltungen:
- EP-A- 0 943 470
- WO-A-01/76898
- DE-A- 19 902 049
- GB-A- 1 285 494
- US-A- 5 193 849
- US-A- 5 452 919
- US-A- 5 475 596
- US-A- 5 513 107
- PATENT ABSTRACTS OF JAPAN vol. 013, no. 305 (M-849), 13. Juli 1989 (1989-07-13) -& JP 01 095921 A (MAZDA MOTOR CORP), 14. April 1989 (1989-04-14)
- PATENT ABSTRACTS OF JAPAN vol. 009, no. 060 (M-364), 16. März 1985 (1985-03-16) & JP 59 195411 A (AISHIN SEIKI KK;OTHERS: 01), 6. November 1984 (1984-11-06)
- PATENT ABSTRACTS OF JAPAN vol. 013, no. 244 (M-834), 7. Juni 1989 (1989-06-07) & JP 01 052517 A (TOKICO LTD), 28. Februar 1989 (1989-02-28)
- PATENT ABSTRACTS OF JAPAN vol. 004, no. 045 (M-006), 9. April 1980 (1980-04-09) & JP 55 015321 A (AISIN SEIKI CO LTD), 2. Februar 1980 (1980-02-02)

## Beschreibung

Die Erfindung betrifft eine Niveauregelanlage für ein Kraftfahrzeug mit Luftfedern, die zur Niveauregulierung eines Fahrzeugaufbaus mit Druckluft befüllt oder entleert werden können, und mit einem Steuergerät, das die Funktionen Befüllen und Entleeren in Abhängigkeit von dem Niveau des Fahrzeugaufbaus steuert oder regelt.

Derartige Niveauregelanlagen sind aus dem Stand der Technik seit langem bekannt und beispielsweise in der DE 35 42 975 C2 und in der DE 198 35 491 C2 ausführlich beschrieben. In jüngster Vergangenheit wird von der Kraftfahrzeugindustrie vermehrt der Wunsch geäußert, dass solche Niveauregelanlagen nicht ausschließlich zur Regulierung des Niveaus (d.h. zum Befüllen und Entleeren der Luftfedern) des Fahrzeugaufbaus verwendet werden sollen, sondern in ihnen zusätzliche Funktionen realisiert werden sollen. Eine dieser Funktionen besteht insbesondere darin, dass mittels einer Druckluftquelle der Niveauregelanlage über einen Reifenfüllanschluss ein Reserverad auffüllbar sein soll. Diese zusätzliche Funktion der Niveauregelanlage ermöglicht es, das Reserverad als Faltrad auszubilden, so dass es weniger Bauraum benötigt als ein übliches Reserverad. Die Ersparnis von Bauraum ist insbesondere in modernen Kraftfahrzeugen von Vorteil, da in diesen der zur Verfügung stehende Bauraum immer knapper wird. Weitere zusätzliche Funktionen, die z.B. eine Schiefstellung des Kraftfahrzeuges bei geöffneten Türen unterbinden, sind denkbar. Die zusätzlichen Funktionen sollen über Schalter, die entweder vom Kraftfahrzeugfahrer oder automatisch betätigbar sind, ausgelöst werden.

Das Steuergerät einer herkömmlichen Niveauregelanlage ist so ausgebildet, dass mit ihm die Funktion einer Niveauregulierung problemlos gesteuert werden kann. Die Auslösung weiterer Funktionen über Schalter ist mit diesem Steuergerät (z.B. die Auslösung der o.g. Funktion "Reserveradbefüllung") jedoch nicht ohne weiteres möglich, da zusätzliche Funktionen bisher nicht vorgesehen sind und das Steuergerät dafür nicht ausgelegt ist. Schwierigkeiten treten insbesondere dann auf, wenn mehrere zusätzliche Funktionen in ein herkömmliches Steuergerät einer Niveauregelanlage integriert werden sollen.

Aus der US 5 513 107 ist ein Kraftfahrzeug bekannt, das über mehrere Steuergeräte verfügt. Hierbei steht ein übergeordnetes Kraftfahrzeugsteuergerät mit untergeordneten Steuergeräten für die Sitze, die Niveauregelanlage, die Motorsteuerung und für die Lenkung in Verbindung. Mit Hilfe der Steuergeräte kann das Kraftfahrzeug an unterschiedliche Fahrer des Kraftfahrzeuges angepasst werden. Dazu sind in dem übergeordneten Steuergerät Parameter gespeichert, die für bestimmte Fahrer und Einstellungen des Kraftfahrzeuges charakteristisch sind. So sind beispielsweise Parameter für komfortbetonte Fahrer und Parameter für sportliche Fahrer gespeichert. Wenn ein bestimmter Fahrer das Kraftfahrzeug nutzt, werden die entsprechenden Parameter von dem übergeordneten Steuergerät an die untergeordneten Steuergeräte und übermittelt. Bei einem komfortbetonten Fahrer werden beispielsweise aus dem Steuergerät komfortbetonte Parameter für die Federung an das Steuergerät übermittelt. Die untergeordneten Steuergeräte steuern die ihnen zugeordneten Systeme mit den zuvor übertragenen und einprogrammierten Parametern.

Aus der US 5 452 919 ist eine Niveauregelanlage mit einem Steuergerät bekannt, das zusätzliche Funktionen ausführen kann. Zur Auslösung der zusätzlichen Funktionen ist das Steuergerät direkt mit Schaltern verbunden. Dazu benötigt das Steuergerät jedoch entsprechende Anschlüsse, die nicht immer vorhanden sind.

Der Erfindung liegt die Aufgabe zu Grunde, eine Niveauregelanlage der eingangs genannten Art auf einfache Art und Weise für zusätzliche Funktionen zugängig zu machen.

Die Aufgabe wird durch den Anspruch 1 gelöst.

Die Erfindung macht sich zu Nutze, dass ohnehin weitere Steuergeräte im Kraftfahrzeug vorhanden sind und über zusätzliche freie Anschlüsse für einen oder mehrere Schalter verfügen (z.B. das Steuergerät für das Bordnetz des Kraftfahrzeuges).

Der mit der Erfindung erzielte Vorteil ist insbesondere darin zu sehen, dass eine Niveauregelanlage, deren Steuereinheit ausschließlich für die Auslösung der Funktionen Befüllen und Entleeren der Luftfedern ausgelegt ist und insbesondere keine zusätzlichen Anschlüsse für Schalter zur Auslösung weiterer Funktionen aufweist, auf einfache Art und Weise zusätzlichen Funktionen zugängig gemacht werden kann. Es wird insbesondere möglich, bereits spezifizierte Steuergeräte von Niveauregelanlagen zu verwenden, die eine Auslösung von zusätzlichen Funktionen über Schalter an sich nicht ermöglichen. Darüber hinaus ist auf einfache Art und Weise ein Nachrüsten bestehender Niveauregelanlagen mit zusätzlichen Funktionen möglich, auch wenn die Steuergeräte der Niveauregelanlagen an sich nicht zur Auslösung zusätzlicher Funktionen geeignet sind.

Gemäß einer Weiterbildung der Erfindung nach Anspruch 2 ist das weitere Steuergerät mit mehreren Schaltern verbunden, wobei sich die jeweiligen Signalsequenzen, die eine Überführung eines Schalters von dem ersten Zustand in den zweiten Zustand anzeigen, voneinander unterscheiden. Der Vorteil der Weiterbildung ist darin zu sehen, dass das Steuergerät der Niveauregelanlage aus der Signalsequenz erkennen kann, welche zusätzliche Funktion in der Niveauregelanlage ausgelöst werden soll.

Gemäß einer Weiterbildung der Erfindung nach Anspruch 3 ist das weitere Steuergerät mit einem Schalter zur Auslösung einer Reserveradbefüllung mittels mindestens einer Druckluftquelle der Niveauregelanlage verbunden. Wenn dieser Schalter von einem ersten Zustand in einen zweiten Zustand überführt wird, wird eine entsprechende Signalsequenz von dem weiteren Steuergerät zu dem Steuergerät der Niveauregelanlage übermittelt und dort die zusätzliche Funktion "Reserveradbefüllung" ausgeführt.

Gemäß einer Weiterbildung der Erfindung nach Anspruch 4 wird der Schalter zur Auslösung der Reserveradbefüllung über ein schaltbares Wegeventil betätigt, das der Schalter zur Auslösung der Reserveradbefüllung über ein schaltbares Wegeventil betätigt, das in einem Grundzustand die Befüllung eines Reserverades über einen Reifenfüllanschluss unterbindet und in einem Schaltzustand die Befüllung des Reserverades über den Reifenfüllanschluss ermöglicht, wobei sich der Schalter in seinem ersten Zustand befindet, wenn sich das Wegeventil im Grundzustand befindet, und in den zweiten Zustand überführt wird, wenn das Wegeventil in den Schaltzustand überführt wird. Vorzugsweise wird das schaltbare Wegeventil direkt von dem Kraftfahrzeugfahrer betätigt, wenn er ein Reserverad befüllen will (z.B. über einen Schalter im Armaturenbrett). Der Vorteil der Weiterbildung ist dann darin zu sehen, dass das schaltbare Wegeventil nicht von dem Steuergerät der Niveauregelanlage angesteuert zu werden braucht, so dass dort kein separater Ansteuerkanal zur Verfügung gestellt zu werden braucht (somit können auch herkömmliche Steuergeräte von Niveauregelanlagen verwendet werden, selbst wenn diese einen entsprechenden Ansteuerkanal nicht zur Verfügung stellen können).

Gemäß einer Weiterbildung der Erfindung nach Anspruch 5 ist das weitere Steuergerät mit jeweils einem Schalter für jede Tür des Fahrzeuges verbunden, der anzeigt, ob die entsprechende Tür offen oder geschlossen ist. Der Vorteil dieser Weiterbildung wird verständlich, wenn man Folgendes berücksichtigt: Wenn eine Tür des Kraftfahrzeuges geöffnet ist und der Fahrzeugaufbau des Kraftfahrzeuges gleichzeitig schief gestellt ist, kann es passieren, dass die Tür auf dem Untergrund aufsetzt und beschädigt wird. Wenn das Steuergerät der Niveauregelanlage eine Signalsequenz erhält, die anzeigt, welche Tür des Fahrzeuges geöffnet wird, kann mit Hilfe der Niveauregelanlage eine eventuelle Schiefstellung des Kraftfahrzeuges, die zu einer Schädigung der Tür führen könnte, ausgeglichen werden (mit einem Schalter für eine Tür des Kraftfahrzeuges wird also die zusätzliche Funktion "Überprüfung der Schiefstellung des Fahrzeugaufbaus und ggf. Ausgleich dieser" ausgelöst). Der Vorteil dieser Weiterbildung ist also darin zu sehen, dass eine Beschädigung der Türen des Kraftfahrzeuges weitestgehend vermieden werden kann.

Gemäß einer Weiterbildung der Erfindung nach Anspruch 6 ist das weitere Steuergerät mit einem Schalter für die Heckklappe verbunden, der anzeigt, ob diese offen oder geschlossen ist. Der Vorteil dieser Weiterbildung ist darin zu sehen, dass das Steuergerät der Niveauregelanlage eine Absenkung des Fahrzeugaufbaus zumindest im Bereich der Heckklappe vornehmen kann, wenn dem Steuergerät angezeigt wird, dass die Heckklappe geöffnet ist und der Fahrzeugaufbau im Bereich der Heckklappe ein bestimmtes Niveau überschreitet (mit dem Schalter für die Heckklappe des Kraftfahrzeuges wird also die zusätzliche Funktion "Überprüfung des Niveaus des Fahrzeugaufbaus und ggf. Absenken im Bereich der Heckklappe" ausgelöst). So kann eine Beschädigung der Heckklappe (beispielsweise durch Anstoßen der Heckklappe an das Dach einer Garage) weitestgehend vermieden werden.

Gemäß einer Weiterbildung der Erfindung nach Anspruch 7 wird eine zusätzliche Funktion von dem Steuergerät der Niveauregelanlage über einen begrenzten Zeitraum durchgeführt. Es kann dazu kommen (z.B. durch einen Kurzschluss im Schalter), dass eine zusätzliche Funktion irrtümlicherweise ausgelöst wird. Der Vorteil der Weiterbildung ist darin zu sehen, dass die Ausführung der zusätzlichen Funktion nach Ablauf des Zeitraumes abgebrochen wird und somit eine Schädigung der Niveauregelanlage (z.B. durch zu lange Laufzeit des Kompressors der Niveauregelanlage, wenn irrtümlicherweise die zusätzliche Funktion "Reserveradbefüllung" ausgelöst wird) weitgehend vermieden werden kann. Es ist ebenfalls möglich, die Weiterbildungen nach den Ansprüche 7 und 8 miteinander zu kombinieren, d.h. eine zusätzliche Funktion solange auszuüben, wie sich der entsprechende Schalter in seinem zweiten Schaltzustand befindet, jedoch die Ausübung nach einem begrenzten Zeitraum abzubrechen (und zwar auch dann, wenn sich der Schalter immer noch im zweiten Schaltzustand befindet).

Der Nachrichtenkanal, der das weitere Steuergerät und das Steuergerät der Niveauregelanlage miteinander verbindet, kann parallel ausgebildet sein. Gemäß einer vorteilhaften Weiterbildung der Erfindung nach Anspruch 8 ist der Nachrichtenkanal jedoch seriell ausgebildet. Ein Vorteil dieser Weiterbildung ist darin zu sehen, dass ein serieller Nachrichtenkanal besonders einfach und damit preiswert realisiert werden kann. Darüber hinaus ist die Datenübertragung über einen seriellen Nachrichtenkanal für die vorliegende Erfindung ausreichend schnell, da nur geringe Datenmengen über den Nachrichtenkanal übertragen zu werden brauchen.

Ein Ausführungsbeispiel und weitere Vorteile der Erfindung werden im Zusammenhang mit der nachstehenden Figur erläutert, die eine Niveauregelanlage in schematischer Darstellung zeigt.

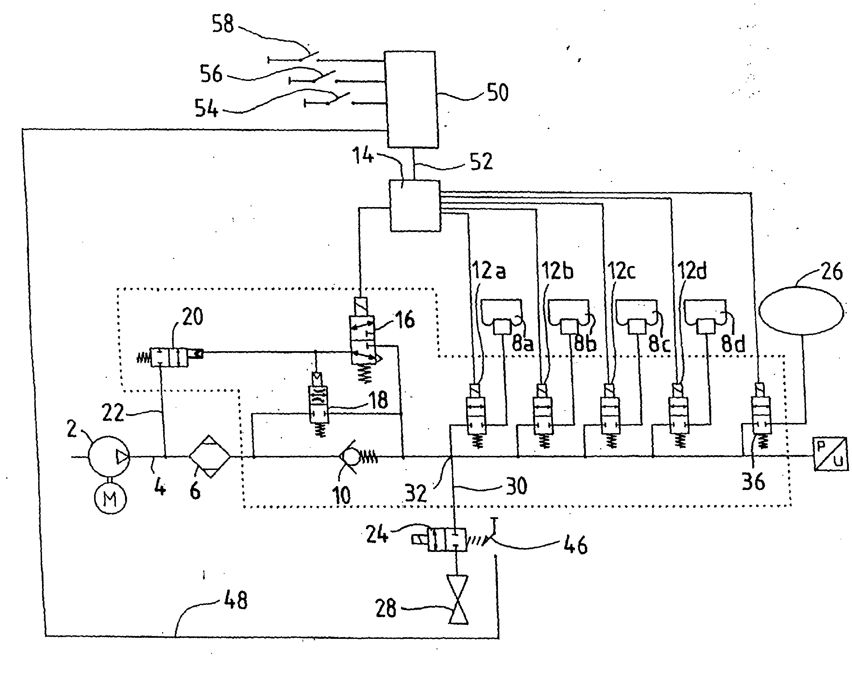

Die Figur zeigt eine Niveauregelanlage mit einem Kompressor 2, der über eine Druckluftleitung 4 mit einem Lufttrockner 6 verbunden ist. Jede Luftfeder 8a - 8d der Niveauregelanlage ist mit Hilfe des Kompressors 2 über den Lufttrockner 6 und ein Rückschlagventil 10, das zu den Luftfedern 8a - 8d hin öffnet, und über ein jeweils einer Luftfeder zugeordnetes elektrisch steuerbares Wegeventil 12a - 12d mit Druckluft auffüllbar. Dazu wird das Wegeventil 12a - 12d, das der aufzufüllenden Luftfeder 8a - 8d zugeordnet ist, von dem Steuergerät 14 der Niveauregelanlage angesteuert und von dem in der Figur gezeigten Grundzustand in den anderen Schaltzustand überführt. Darüber hinaus wird von dem Steuergerät 14 der Kompressor 2 angesteuert, so dass dieser zu laufen beginnt.

Zum Entleeren einer Luftfeder 8a- 8d wird das Wegeventil 12a - 12d wiederum von dem Steuergerät 14 von dem Grundzustand in seinen Schaltzustand überführt. Darüber hinaus wird das elektrisch steuerbare Wegeventil 16 durch das Steuergerät 14 von dem in der Figur gezeigten Grundzustand in seinen Schaltzustand überführt. Aus der Luftfeder 8a - 8d gelangt dann über das Wegeventil 16 Druckluft an die pneumatischen Steuereingänge der pneumatisch steuerbaren Wegeventile 18 und 20, so dass diese von dem in der Figur gezeigten Grundzustand in ihren Schaltzustand übergehen. Die Druckluftleitung 22, die von der Druckluftleitung 4 abzweigt, ist dann über das pneumatisch steuerbare Wegeventil 20 mit der Atmosphäre verbunden. Aus der Luftfeder 8a - 8d kann dann über das Wegeventil 12a - 12 d, das pneumatisch steuerbare Wegeventil 18, den Lufttrockner 6 und das pneumatisch steuerbare Wegeventil 20 Druckluft in die Atmosphäre abgelassen werden.

Über die bisher genannten Bestandteile hinaus verfügt die Niveauregelanlage über einen Druckluftspeicher 26. Dieser ist mit Hilfe des Kompressors 2 über den Lufttrockner 6, das Rückschlagventil 10 und das elektrische steuerbare Wegeventil 36 mit Druckluft auffüllbar. Dazu wird das elektrisch steuerbare Wegeventil 36 von dem Steuergerät 14 von dem in der Figur gezeigten Grundzustand in den Schaltzustand überführt und der Kompressor 2 angesteuert, so dass dieser zu laufen beginnt. Mit Hilfe des Druckluftspeichers kann eine Luftfeder 8a - 8d über die Wegeventile 36 und 12a - 12d mit Druckluft befüllt werden; in diesem Fall werden die entsprechenden Wegeventile von dem Steuergerät 12 angesteuert, so dass sie vom Grundzustand in den Schaltzustand übergehen.

Die üblichen Funktionen Befüllen und das Entleeren der Luftfedern 8a - 8d (Befüllen des Druckluftspeichers 26 und Befüllen der Luftfedern 8a - 8d aus dem Druckluftspeicher) werden ausschließlich von dem Steuergerät 14 der Niveauregelanlage (d.h. ohne jede externe Ansteuerung) gesteuert. In der Niveauregelanlage können jedoch darüber hinaus zusätzliche Funktionen durchgeführt werden, die im Folgenden erläutert werden.

Eine der zusätzlichen Funktionen ist beispielsweise die Befüllung eines Reserverades über einen Reifenfüllanschluss 28, der in einer Druckleitung 30 liegt, die im Punkt 32 von der Druckleitung 4 abzweigt, der (vom Kompressor 2 aus gesehen) hinter dem Rückschlagventil 10 liegt. In der Druckluftleitung 30 befindet sich ein steuerbares Wegeventil 24, das in dem in der Figur gezeigten Grundzustand die Druckluftleitung 30 sperrt und in seinem Schaltzustand die Druckluftleitung 30 durchschaltet.

An den Reifenfüllanschluss 28 kann im Bedarfsfall z.B. ein (nicht gezeigtes) Reserverad angeschlossen werden, das dann wie folgt aufgefüllt wird. Zunächst wird das steuerbare Wegeventil 24 von dem in der Figur gezeigten Grundzustand in seinen Schaltzustand überführt, in dem es die Druckluftleitung 30 durchschaltet. Die Überführung des Wegeventils 24 in seinen Schaltzustand erfolgt durch den Kraftfahrzeugfahrer. Dazu ist das Wegeventil 24 entweder als elektrisch steuerbares Wegeventil ausgebildet und wird beispielsweise über einen Schalter in dem Armaturenbrett des Fahrzeugs angesteuert. Alternativ ist es möglich, das Wegeventil 24 als mechanisch zu betätigendes Wegeventil auszubilden, das mit Hilfe eines Schalthebels etc. in seinen Schaltzustand überführt wird.

Durch die Überführung in den Schaltzustand überführt das steuerbare Wegeventil 24 einen Schalter 46 von einem ersten Schaltzustand (in dem der Schalter 46 geöffnet ist) in einen zweiten Schaltzustand (in dem der Schalter 46 geschlossen ist), woraufhin ein Signal über die Signalleitung 48 an ein weiteres Steuergerät 50 (z.B. das Steuergerät des Bordnetzes) übermittelt wird. (Alternativ ist es möglich, auf den Schalter 46 zu verzichten. In diesem Fall wird der Schalter, mit dem das schaltbare Wegeventil 24 angesteuert wird, entsprechend dem Schalter 46 genutzt). Wenn das Steuergerät 50 dieses Signal empfängt, übermittelt es über einen seriellen Nachrichtenkanal 52 eine Signalsequenz an das Steuergerät 14 der Niveauregelanlage. Das Steuergerät 14 wertet die Signalsequenz aus und erkennt aus ihr, dass die zusätzliche Funktion "Reserveradbefüllung" ausgeführt werden soll. Um die Funktion auszuführen, steuert das Steuergerät 14 den Kompressor 2 der Niveauregelanlage an, so dass dieser über den Lufttrockner 6, das Rückschlagventil 10, das steuerbare Wegeventil 24 und den Reifenfüllanschluss 28 das (nicht gezeigte) Reserverad auffüllen kann. Gleichzeitig oder alternativ kann das Reserverad mit Druckluft aus dem Druckluftspeicher 26 aufgefüllt werden, um die Funktion "Reserveradbefüllung" auszuführen. Dazu wird von dem Steuergerät 14 das elektrisch steuerbare Wegeventil 36 angesteuert, so dass dieses von dem in der Figur gezeigten Grundzustand in seinen Schaltzustand übergeht. Das Reserverad ist dann über die steuerbaren Wegeventile 36 und 24 und den Reifenfüllanschluss 28 mit dem Reserverad verbunden.

Die Funktion "Reserveradbefüllung" wird von dem Steuergerät 14 der Niveauregelanlage solange durchgeführt, wie sich der Schalter 46 (bzw. der Schalter, mit dem das Wegeventil 24 angesteuert wird) in seinem zweiten Schaltzustand befindet, d.h. die Funktion wird abgebrochen, wenn der Schalter 46 (bzw. der Schalter, mit dem das Wegeventil 24 angesteuert wird) von seinem zweiten Schaltzustand wieder in seinen ersten Schaltzustand überführt wird. Alternativ ist es möglich, dass die Funktion "Reserveradbefüllung" von dem Steuergerät 14 der Niveauregelanlage unabhängig von dem Schaltzustand des Schalters 46 (bzw. des Schalters, mit dem das Wegeventil 24 angesteuert wird) nur über einen begrenzten Zeitraum durchgeführt wird, der so bemessen ist, dass sichergestellt ist, dass das zum Kraftfahrzeug gehörige Reserverad vollständig befüllt werden kann.

Die obigen Ausführungen machen deutlich, dass die zusätzliche Funktion "Reserveradbefüllung" ausschließlich von einem "externen" Schalter, der ein Wegeventil ansteuert, ausgelöst wird. Nach der Auslösung der zusätzlichen Funktion durch den Schalter werden sämtliche Steuerfunktionen, die zur Durchführung der zusätzlichen Funktion benötigt werden, von dem Steuergerät 14 der Niveauregelanlage übernommen. Bei den Komponenten, die zur Durchführung der zusätzlichen Funktion von dem Steuergerät 14 der Niveauregelanlage angesteuert werden, handelt es sich ausschließlich um Komponenten, die ohnehin in der Niveauregelanlage vorhanden sind und zur Durchführung der üblichen Funktionen (siehe oben) genutzt werden.

Das weitere Steuergerät 50 ist über den Schalter 46 hinaus mit weiteren Schaltern 54, 56 und 58 verbunden. Der Schalter 54 zeigt im geöffneten Zustand eine Öffnung der linken vorderen Tür des Kraftfahrzeuges und im geschlossenen Zustand eine geschlossene linke Vordertür des Kraftfahrzeuges an. Der Schalter 56 zeigt das Entsprechende für die rechte Vordertür des Kraftfahrzeuges an (bei einem viertürigen Fahrzeug können weitere Schalter für die Hintertüren vorhanden sein). Der Schalter 58 zeigt im geöffneten Zustand eine geöffnete Heckklappe und im geschlossenen Zustand eine geschlossene Heckklappe an. Wenn der Schalter 54 geschlossen ist, befindet er sich in einem ersten Schaltzustand und die linke vordere Tür des Kraftfahrzeuges ist geschlossen. Wenn die linke vordere Tür des Kraftfahrzeuges geöffnet wird, wird auch der Schalter 54 geöffnet und damit in seinen zweiten Schaltzustand überführt. Das weitere Steuergerät 50 erhält dann ein entsprechendes Signal und sendet über den Nachrichtenkanal 52 eine entsprechende Signalsequenz an das Steuergerät 14 der Niveauregelanlage, die anzeigt, dass der Schalter 54 in seinen zweiten Schaltzustand überführt worden ist. Das Steuergerät 14 der Niveauregelanlage führt daraufhin die Funktion "Überprüfung der Schiefstellung des Kraftfahrzeuges und ggf. Behebung der Schiefstellung" durch, d.h. es überprüft daraufhin, ob der Fahrzeugaufbau des Kraftfahrzeuges derart schief gestellt ist, dass es zu einer Beschädigung der Tür kommen kann. Ist dies der Fall, so steuert das Steuergerät 14 die Niveauregelanlage durch Belüften oder Entleeren der Luftfedern 8a - 8d so, dass eine Schiefstellung des Fahrzeugaufbaus vermieden wird. Analog wird vorgegangen, wenn der Schalter 56 von seinem ersten Schaltzustand (in dem die rechte vordere Tür des Kraftfahrzeuges geschlossen ist) in den zweiten Schaltzustand oder der Schalter 58 von seinem ersten Schaltzustand (in dem die Heckklappe geschlossen ist) in den zweiten Zustand überführt wird.

Der Abbruch der o.g. zusätzlichen Funktionen, die von den Schaltern 54, 56 und 58 ausgelöst werden, erfolgt genauso, wie es im Zusammenhang mit der zusätzlichen Funktion "Reserveradbefüllung" erläutert worden ist.

Die obigen Ausführungen zeigen, dass auch die übrigen zusätzlichen Funktionen von den Schaltern 54, 56 und 58 ausgelöst werden. Ihre Durchführung erfolgt ausschließlich mit dem Steuergerät 14 der Niveauregelanlage, die dazu ausschließlich Komponenten der Niveauregelanlage ansteuert, die zur Durchführung der üblichen Funktionen ohnehin vorhanden sind.

Die Signalsequenzen, die von dem weiteren Steuergerät 50 zu dem Steuergerät 14 der Niveauregelanlage übermittelt werden und die eine Überführung der Schalter 46, 54, 56 und 58 von dem ersten Schaltzustand in den zweiten Schaltzustand anzeigen und die die zusätzlichen Funktionen auslösen, unterscheiden sich voneinander. Das Steuergerät 14 der Niveauregelanlage kann somit auf Grund der Signalsequenz entscheiden, welche zusätzliche Funktion in der Niveauregelanlage ausgeführt werden soll und welche Bestandteile der Niveauregelanlage anzusteuern sind.

### Bezugszeichenliste

### (ist Teil der Beschreibung)

- 2: Kompressor
- 4: Druckluftleitung
- 6: Lufttrockner
- 8a -8d: Luftfedern
- 10: Rückschlagventil
- 12a - 12d: Wegeventil
- 14: Steuergerät der Niveauregelanlage
- 16: Wegeventil
- 18, 20: pneumatisch steuerbares Wegeventil
- 22: Druckluftleitung
- 24: Wegeventil
- 26: Druckluftspeicher
- 28: Reifenfüllanschluss
- 30: Druckluftleitung
- 32: Punkt
- 34: -
- 36: -
- 38: -
- 40: -
- 42: -
- 44: -
- 46: Schalter
- 48: Signalleitung
- 50: weiteres Steuergerät
- 52: Nachrichtenkanal
- 54: Schalter
- 56: Schalter
- 58: Schalter

## Patentansprüche

1. Niveauregelanlage für ein Kraftfahrzeug mit Luftfedern (8a - 8d), die zur Niveauregulierung eines Fahrzeugaufbaus mit Druckluft befüllt oder entleert werden können, und mit einem Steuergerät (14), das die Funktionen Befüllen und Entleeren in Abhängigkeit von dem Niveau des Fahrzeugaufbaus steuert oder regelt, **dadurch gekennzeichnet, dass**
- das Steuergerät (14) der Niveauregelanlage über einen Nachrichtenkanal (52) mit einem weiteren Steuergerät (50) des Kraftfahrzeuges in Verbindung steht, und dass
- das weitere Steuergerät (52) mit mindestens einem Schalter (46, 54, 56, 58) zur Auslösung einer zusätzlichen Funktion in der Niveauregelanlage verbunden ist, und dass
- das weitere Steuergerät (50) dafür eingerichtet ist, über den Nachrichtenkanal (52) eine Signalsequenz an das Steuergerät (14) der Niveauregelanlage zu senden, um eine weitere Funktion in der Niveauregelanlage durchführen zu lassen, wenn der Schalter (46, 54, 56, 58) von einem ersten Zustand in einen zweiten Zustand überführt wird, und dass
- das Steuergerät (14) der Niveauregelanlage die zusätzliche Funktion durchführt, wenn es die Signalsequenz empfängt, und dass eine zusätzliche Funktion von dem Steuergerät (14) der Niveauregelanlage solange durchgeführt wird, wie sich der Schalter (46, 54, 56, 58), der die entsprechende Funktion auslöst, in seinem zweiten Schaltzustand befindet und die Funktion abgebrochen wird, wenn der Schalter (46, 54, 56, 58) von seinem zweiten Schaltzustand wieder in den ersten Schaltzustand überführt wird.

2. Niveauregelanlage nach Anspruch 1, **dadurch gekennzeichnet, dass** das weitere Steuergerät (50) mit mehreren Schaltern (46, 54, 56, 58) verbunden ist und das sich die jeweiligen Signalsequenzen, die eine Überführung eines Schalters (46, 54, 56, 58) von dem ersten Zustand in den zweiten Zustand anzeigen, voneinander unterscheiden.

3. Niveauregelanlage nach einem der Ansprüche 1 bis 2, **dadurch gekennzeichnet, dass** das weitere Steuergerät (50) mit einem Schalter (46, 54, 56, 58) zur Auslösung einer Reserveradbefüllung mittels mindestens einer Druckluftquelle (2, 26) der Niveauregelanlage verbunden ist.

4. Niveauregelanlage nach Anspruch 3, **dadurch gekennzeichnet, dass** der Schalter (46, 54, 56, 58) zur Auslösung der Reserveradbefüllung über ein schaltbares Wegeventil (24) betätigt wird, das in einem Grundzustand die Befüllung eines Reserverades über einen Reifenfüllanschluss (28) unterbindet und in einem Schaltzustand die Befüllung des Reserverades über den Reifenfüllanschluss (28) ermöglicht, wobei sich der Schalter (46, 54, 56, 58) in seinem ersten Zustand befindet, wenn sich das Wegeventil (24) im Grundzustand befindet, und in den zweiten Zustand überführt wird, wenn das Wegeventil (24) in den Schaltzustand überführt wird.

5. Niveauregelanlage nach einem der Ansprüche 1 bis 2, **dadurch gekennzeichnet, dass** das weitere Steuergerät (50) mit jeweils einem Schalter (46, 54, 56, 58) für jede Tür des Kraftfahrzeuges verbunden ist, der anzeigt, ob die entsprechende Tür offen oder geschlossen ist.

6. Niveauregelanlage nach einem der Ansprüche 1 bis 2, **dadurch gekennzeichnet, dass** das weitere Steuergerät (50) mit einem Schalter (46, 54, 56, 58) für die Heckklappe verbunden ist, der anzeigt, ob diese offen oder geschlossen ist.

7. Niveauregelanlage nach einem der Ansprüche 1 bis 6, **dadurch gekennzeichnet, dass** eine zusätzliche Funktion von dem Steuergerät (14) der Niveauregelanlage über einen begrenzten Zeitraum durchgeführt wird und nach dem Zeitraum auch dann abgebrochen wird, wenn sich der Schalter (46, 54, 56, 58) immer noch im zweiten Zustand befindet.

8. Niveauregelanlage nach einem der Ansprüche 1 bis 7, **dadurch gekennzeichnet, dass** der Nachrichtenkanall (52) seriell ausgebildet ist.

## Claims

1. Levelling system for a motor vehicle with air springs (8a-8d) which may be charged with compressed air or discharged of compressed air for regulating the level of a vehicle body and with a control unit (14) which controls or regulates the functions of charging and discharging depending on the level of the vehicle body, **characterized in that**
- the control unit (14) of the levelling system is connected to a further control unit (50) of the motor vehicle via a communication channel (52), and **in that**
- the further control unit (52) is connected to at least one switch (46, 54, 56, 58) for triggering an additional function in the levelling system, and **in that**
- the further control unit (50) is designed to transmit a signal sequence to the control unit (14) of the levelling system via the communication channel (52) in order to allow a further function in the levelling system to be carried out when the switch (46, 54, 56, 58) is transferred from a first state into a second state, and **in that**
- the control unit (14) of the levelling system carries out the additional function when it receives the signal sequence, and **in that** an additional function is carried out by the control unit (14) of the levelling system provided that the switch (46, 54, 56, 58), which triggers the corresponding function, is in its second switching state and the function is interrupted when the switch (46, 54, 56, 58) is transferred from its second switching state back into the first switching state.

2. Levelling system according to Claim 1, **characterized in that** the further control unit (50) is connected to a plurality of switches (46, 54, 56, 58) and **in that** the respective signal sequences which indicate the transfer of a switch (46, 54, 56, 58) from the first state into the second state, differ from one another.

3. Levelling system according to one of Claims 1 to 2, **characterized in that** the further control unit (50) is connected to a switch (46, 54, 56, 58) for triggering the inflation of a spare tyre by means of at least one compressed air source (2, 26) of the levelling system.

4. Levelling system according to Claim 3, **characterized in that** the switch (46, 54, 56, 58) for triggering the inflation of the spare tyre is actuated via a switchable directional valve (24) which prevents the inflation of a spare tyre via a tyre inflation connector (28) in a base state and in a switching state allows the inflation of the spare tyre via the tyre inflation connector (28), the switch (46, 54, 56, 58) being in its first state when the directional valve (24) is in the base state and is transferred into the second state when the directional valve (24) is transferred into the switching state.

5. Levelling system according to one of Claims 1 to 2, **characterized in that** the further control unit (50) is connected to one respective switch (46, 54, 56, 58) for each door of the motor vehicle which indicates whether the corresponding door is open or closed.

6. Levelling system according to one of Claims 1 to 2, **characterized in that** the further control unit (50) is connected to a switch (46, 54, 56, 58) for the boot lid which indicates whether said boot lid is open or closed.

7. Levelling system according to one of Claims 1 to 6, **characterized in that** an additional function is carried out by the control unit (14) of the levelling system over a limited time period and is interrupted after the time period, even if the switch (46, 54, 56, 58) is still in the second state.

8. Levelling system according to one of Claims 1 to 7, **characterized in that** the communication channel (52) is configured in series.

## Revendications

1. Installation de régulation de niveau pour un véhicule automobile doté d'amortisseurs pneumatiques (8a - 8d) qui peuvent être remplis d'air comprimé ou être vidés pour réguler le niveau du châssis du véhicule et d'un appareil de commande (14) qui commande ou régule les fonctions de remplissage et de vidage en fonction du niveau du châssis du véhicule, **caractérisée en ce que** :
l'appareil de commande (14) de l'installation de régulation de niveau est relié par un canal (52) de transmission d'informations à un autre appareil de commande (50) du véhicule automobile,
**en ce que** le deuxième appareil de commande (52) est relié à au moins un commutateur (46, 54, 56, 58) qui lance une fonction supplémentaire de l'installation de régulation de niveau,
**en ce que** l'autre appareil de commande (50) est prévu pour envoyer par le canal (52) de transmission d'informations une séquence de signaux à l'appareil de commande (14) de l'installation de régulation de niveau pour pouvoir faire exécuter une autre fonction par l'installation de régulation de niveau lorsque le commutateur (46, 54, 56, 58) est déplacé d'une première position en une deuxième position et
**en ce que** l'appareil de commande (14) de l'installation de régulation de niveau exécute la fonction supplémentaire lorsqu'il reçoit la séquence de signaux et **en ce qu'**une fonction supplémentaire est exécutée par l'appareil de commande (14) de l'installation de régulation de niveau tant que le commutateur (46, 54, 56, 58) qui lance la fonction correspondante se trouve dans sa deuxième position de commutation, la fonction étant interrompue lorsque le commutateur (46, 54, 56, 58) est ramené de sa deuxième position de commutation jusque dans sa première position de commutation.

2. Installation de régulation de niveau selon la revendication 1, **caractérisée en ce que** l'autre appareil de commande (50) est relié à plusieurs commutateurs (46, 54, 56, 58) et **en ce que** les séquences de signaux qui indiquent le passage d'un commutateur (46, 54, 56, 58) de sa première position jusque dans sa deuxième position sont différentes les unes des autres.

3. Installation de régulation de niveau selon l'une des revendications 1 à 2, **caractérisée en ce que** l'autre appareil de commande (50) est relié à un commutateur (46, 54, 56, 58) qui déclenche le remplissage d'une roue de secours au moyen d'au moins une source d'air comprimé (2, 26) de l'installation de régulation de niveau.

4. Installation de régulation de niveau selon la revendication 3, **caractérisée en ce que** le commutateur (46, 54, 56, 58) est actionné pour lancer le remplissage de la roue de secours par une soupape commutable (24) qui, dans sa position de base, empêche le remplissage de la roue de secours par un raccord (28) de gonflage de pneu et dans une position de commutation permet le remplissage de la roue de secours par le raccord (28) du gonflage de pneu, le commutateur (46, 54, 56, 58) se trouve dans sa première position lorsque la soupape (24) se trouve dans sa position de base et est passé dans sa deuxième position lorsque la soupape (24) est amenée dans sa position de commutation.

5. Installation de régulation de niveau selon l'une des revendications 1 à 2, **caractérisée en ce que** l'autre appareil de commande (50) est relié par un commutateur (46, 54, 56, 58) à une porte respective du véhicule automobile et indique si la porte correspondante est ouverte ou fermée.

6. Installation de régulation de niveau selon l'une des revendications 1 à 2, **caractérisée en ce que** l'autre appareil de commande (50) est relié à un commutateur (46, 54, 56, 58) de hayon arrière qui indique si ce dernier est ouvert ou fermé.

7. Installation de régulation de niveau selon l'une des revendications 1 à 6, **caractérisée en ce qu'**une fonction supplémentaire est exécutée par l'appareil de commande (14) de l'installation de régulation de niveau pendant un laps de temps limité et **en ce que** lorsque ce laps de temps s'est écoulé, l'exécution de cette fonction est interrompue même si le commutateur (46, 54, 56, 58) se trouve toujours dans la deuxième position.

8. Installation de régulation de niveau selon l'une des revendications 1 à 7, **caractérisée en ce que** le canal (52) de transmission d'informations a une configuration série.
